# EUROPEAN PATENT APPLICATION

(11) **EP 4 765 995 A1**
(43) Date of publication of application: **24.06.2026**
(21) Application number: 23948834.9
(22) Date of filing: 15.08.2023
(51) Int. Cl.: H04W 72/512

(54) **SENSING MODE NEGOTIATION METHOD, STATION DEVICE, ACCESS POINT DEVICE, AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/113204
(87) International publication number: WO 2025/035404

(57) **Abstract**

Embodiments of the present disclosure relate to the technical field of communications, and relate to a sensing mode negotiation method, a station device, an access point device, and a communication system. The sensing mode negotiation method comprises: a station device determines a first radio frame, the first radio frame comprising first identification information, the first identification information indicating a sensing mode in which the station device carries out monitoring in auxiliary channels when a main channel is busy, the sensing mode comprising simultaneous sensing and/or time-sharing sensing, the simultaneous sensing indicating that the station device supports simultaneously performing sensing or channel detection in at least two auxiliary channels, and the time-sharing sensing indicating that the station device supports: time-sharingly performing one-by-one sensing or one-by-one channel detection on each auxiliary channel; and sending the first radio frame. A mechanism for further enhancing a sensing mode of a channel is provided.

## Description

### TECHNICAL FIELD

The present disclosure relates to the technical field of communication, and in particular, to a sensing mode negotiation method, a station, an access point, and a communication system.

### BACKGROUND

Currently, the Wi-Fi technology research institute conducts research on topics such as Ultra High Reliability (UHR), with the vision to enhance the reliability of Wireless Local Area Networks (WLAN) connections, reduce latency, improve manageability, increase throughput at different Signal to Noise Ratio (SNR) levels, and reduce device-level power consumption.

In UHR, the mode for sensing channel needs to be enhanced to ensure the latency requirements of low-latency services.

### SUMMARY

The embodiments of the present disclosure provide a sensing mode negotiation method, a station, an access point, and a communication system to provide a mechanism for further enhancing the sensing mode of channel.

In the first aspect, an embodiment of the present disclosure provides a sensing mode negotiation method, the method including:
determining a first wireless frame; where the first wireless frame includes first identification information; the first identification information identifies a sensing mode in which the station monitors on a secondary channel when a primary channel is busy; the sensing mode includes simultaneous sensing and/or time-division sensing;
where the simultaneous sensing identifies that the station supports sensing or channel detection on at least two of the secondary channels simultaneously; the time-division sensing identifies that the station supports: time-division one-to-one sensing on each of the secondary channels respectively; and
sending the first wireless frame.

In the second aspect, an embodiment of the present disclosure further provides a sensing mode negotiation method, the method including:
receiving a first wireless frame; where the first wireless frame includes first identification information; the first identification information identifies a sensing mode in which a station monitors on a secondary channel when a primary channel is busy; the sensing mode includes simultaneous sensing and/or time-division sensing;
where the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively.

In the third aspect, an embodiment of the present disclosure further provides a station, the station including:
a determination module, configured to determine a first wireless frame; where the first wireless frame includes first identification information; the first identification information identifies a sensing mode in which the station monitors on a secondary channel when a primary channel is busy; the sensing mode includes simultaneous sensing and/or time-division sensing;
where the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively; and
a sending module, configured to send the first wireless frame.

In the fourth aspect, an embodiment of the present disclosure further provides an access point, the access point including:
a receiving module, configured to receive a first wireless frame;
where the first wireless frame includes first identification information; the first identification information identifies a sensing mode in which a station monitors on a secondary channel when a primary channel is busy; the sensing mode includes simultaneous sensing and/or time-division sensing;
where the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively.

In the fifth aspect, an embodiment of the present disclosure further provides a station, the station including:
one or more processors;
where the station is configured to execute the sensing mode negotiation method described in the first aspect of the embodiments of the present disclosure.

In the sixth aspect, an embodiment of the present disclosure further provides an access point, the access point including:
one or more processors;
where the access point is configured to execute the sensing mode negotiation method described in the second aspect of the embodiments of the present disclosure.

In the seventh aspect, the embodiments of the present disclosure further provide a communication system, including a station and an access point; where the station is configured to implement the sensing mode negotiation method described in the first aspect of the embodiments of the present disclosure, and the access point is configured to implement the sensing mode negotiation method described in the second aspect of the embodiments of the present disclosure.

In the eighth aspect, the embodiments of the present disclosure further provide a storage medium, which stores instructions. When the instructions are executed on a communication device, the communication device executes the sensing mode negotiation method as described in the first aspect of the embodiments of the present disclosure, or executes the sensing mode negotiation method as described in the second aspect of the embodiments of the present disclosure.

In the embodiments of the present disclosure, the station carries first identification information in the first wireless frame, and the first identification information identifies: a sensing mode in which the station monitors on a secondary channel when the primary channel is busy; the sensing mode includes simultaneous sensing and/or time-division sensing; the simultaneous sensing identifies that the station supports sensing or channel detection on at least two of the secondary channels simultaneously; the time-division sensing identifies that the station supports: time-division one-to-one sensing or one-to-one channel detection on each of the secondary channels. In this way, the access point that receives the first wireless frame can negotiate with the station on a mode in which the station senses on the secondary channel according to the sensing mode supported by the station when the primary channel is busy, and then, according to the negotiation result, enable the station to sense on the secondary channel, thereby adopting different mechanisms to plan communication resources for the station, and communicate with the station in the secondary channel, to improve the throughput of the communication system, and improve resource utilization, thereby improving data transmission rate, and reducing transmission delay.

Additional aspects and advantages of the embodiments of the present disclosure are partially given in the description below, which will become apparent from the description below, or may be learned through the practice of the present disclosure.

### BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is an exemplary schematic diagram of an architecture of a communication system provided according to an embodiment of the present disclosure;
FIG. 2 is a first exemplary interaction diagram of a method provided according to an embodiment of the present disclosure;
FIG. 3 is a second exemplary interaction diagram of a method provided according to an embodiment of the present disclosure;
FIG. 4 is a first flowchart of a sensing mode negotiation method according to an embodiment of the present disclosure;
FIG. 5 is a second flowchart of the sensing mode negotiation method provided according to an embodiment of the present disclosure;
FIG. 6 is a schematic diagram of a structure of a station proposed in an embodiment of the present disclosure;
FIG. 7 is a schematic diagram of a structure of an access point proposed in an embodiment of the present disclosure;
FIG. 8 is a schematic diagram of a structure of a terminal proposed in an embodiment of the present disclosure;
FIG. 9 is a schematic diagram of a structure of a chip proposed in an embodiment of the present disclosure.

### DETAILED DESCRIPTION

The embodiments of the present disclosure provide a sensing mode negotiation method, a station, an access point, and a communication system.

In a first aspect, an embodiment of the present disclosure provides a sensing mode negotiation method, the method including:
the station determining a first wireless frame; where the first wireless frame includes first identification information; the first identification information identifies a sensing mode in which the station monitors on a secondary channel when a primary channel is busy; the sensing mode includes simultaneous sensing and/or time-division sensing;
the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively; and
sending the first wireless frame.

In the above embodiment, the station carries first identification information in the first wireless frame, and the first identification information identifies: a sensing mode in which the station monitors on the secondary channel when the primary channel is busy; the sensing mode includes simultaneous sensing and/or time-division sensing; the simultaneous sensing indicates that the station supports simultaneous sensing or channel detection on at least two of the secondary channels; the time-division sensing indicates that the station supports: time-division one-to-one sensing or one-to-one channel detection on each of the secondary channels respectively. In this way, the access point that receives the first wireless frame can negotiate with the station on the mode in which the station senses on the secondary channel according to the sensing mode supported by the station when the primary channel is busy, and then, according to the negotiation result, enable the station to sense on the secondary channel, thereby adopting different mechanisms to plan communication resources for the station, and communicate with the station in the secondary channel, to improve the throughput of the communication system, and improve resource utilization, thereby improving data transmission rate, and reducing transmission delay.

In combination with some embodiments of the first aspect, in some embodiments, the first wireless frame further includes channel parameter information of the secondary channel supported the station for sensing.

In the above embodiment, by setting the channel parameter information of the secondary channel supported by the station for sensing in the first wireless frame, the access point that receives the first wireless frame can, when the primary channel is busy, negotiate the secondary channel for sensing or channel detection through the station according to the sensing mode supported by the station and the channel parameter information of the secondary channel supported by the station for sensing, and adopt different mechanisms to plan communication resources for the station.

In combination with some embodiments of the first aspect, in some embodiments, the time-division sensing includes sensing sequence information;
the sensing sequence information identifies a sensing sequence for sensing or detecting each of the secondary channels.

In the above embodiment, by setting the sensing sequence information corresponding to the time-division sensing, the sensing sequence information identifying the sensing sequence of sensing or detecting each of the secondary channels, when the primary channel is busy and the station supports time-division sensing, the access point that receives the first wireless frame can use the sensing sequence of sensing or detecting each of the secondary channels identified by the sensing sequence information corresponding to the time-division sensing, and perform sensing or channel detection in the secondary channels in turn, thereby improving the efficiency of sensing or channel detection in the secondary channels.

In combination with some embodiments of the first aspect, in some embodiments, the sensing sequence includes: performing sensing or channel detection according to central frequency points of the secondary channels in an ascending or descending order.

In the above embodiment, the sensing sequence is set to include: performing sensing or channel detection according to the ascending or descending order of the central frequency points of the secondary channel. In this way, when the primary channel is busy and the station supports time-division sensing, the access point that receives the first wireless frame can use the sensing sequence of sensing or channel detection according to the ascending or descending order of the central frequency points of the secondary channel, and sense or perform channel detection in the secondary channels in turn, thereby improving the efficiency of sensing or channel detection in the secondary channels.

In combination with some embodiments of the first aspect, in some embodiments, the sensing sequence information is carried in: the first wireless frame sent during an initial association process, or, in a second wireless frame sent after the initial association process is completed.

In the above embodiment, by carrying the sensing sequence information in the first wireless frame sent during the initial association process, the access point can be informed during the process of establishing the initial association between the station and the access point: the sensing mode supported by the station for monitoring on the secondary channel when the primary channel is busy; by carrying the sensing sequence information in the second wireless frame sent after the initial association process, the access point can be informed after the station and the access point establish the initial association process: the sensing mode supported by the station for monitoring on the secondary channel when the primary channel is busy.

In combination with some embodiments of the first aspect, in some embodiments, the first wireless frame includes a sensing capability field; the sensing capability field includes a first sensing capability flag bit and/or a second sensing capability flag bit;

the first sensing capability flag bit identifies whether the station supports the simultaneous sensing;
the second sensing capability flag bit identifies whether the station supports the time-division sensing.

In the above embodiment, the first wireless frame is set to include a sensing capability field; the sensing capability field includes a first sensing capability flag bit and/or a second sensing capability flag bit; the first sensing capability flag bit indicates whether the station supports the simultaneous sensing; and the second sensing capability flag bit indicates whether the station supports the time-division sensing. In this way, the access point that receives the first wireless frame can learn the sensing capability of the station, negotiate with the station on the mode the station senses in the secondary channel based on the sensing capability, and then based on the negotiation result, enable the station to sense in the secondary channel, thereby adopting different mechanisms to plan communication resources for the station, and communicate with the station in the secondary channel, to improve the throughput of the communication system, and improve resource utilization, thereby improving data transmission rate, and reducing transmission delay.

In combination with some embodiments of the first aspect, in some embodiments, the first wireless frame includes a secondary channel request frame, and the second wireless frame includes a secondary channel confirmation frame;
the first wireless frame and the second wireless frame are UHR action frames, and the UHR action frame identifies a type of the frame as the first wireless frame or the second wireless frame.

In the above embodiment, the first wireless frame and the second wireless frame are UHR action frames, the type of the frame is identified in the UHR action frame to be the first wireless frame or the second wireless frame, the first wireless frame includes a secondary channel request frame, and the second wireless frame includes a secondary channel confirmation frame. In this way, the access point that receives the UHR action frame can determine the first wireless frame or the second wireless frame according to the type of the frame identified by the UHR action frame.

In combination with some embodiments of the first aspect, in some embodiments, after sending the first wireless frame, the method further includes:
receiving a third wireless frame sent by an access point; where the third wireless frame includes second identification information, and the second identification information identifies whether the access point accepts a request content of the first wireless frame.

In the above embodiment, after sending the first wireless frame, the station receives the third wireless frame sent by the access point; where the third wireless frame includes second identification information, and the second identification information identifies whether the access point accepts the request content of the first wireless frame. Whether the access point accepts the request content of the first wireless frame can be known, paving the way for determining the sensing mode for monitoring the secondary channel when the primary channel is busy.

In combination with some embodiments of the first aspect, in some embodiments, the second identification information identifies that the access point rejects the request content of the first wireless frame, and the third wireless frame includes secondary channel information recommended by the access point.

In the above embodiment, the access point determines a third wireless frame carrying second identification information, where the second identification information identifies that the access point rejects the request content of the first wireless frame, and the third wireless frame includes the secondary channel information recommended by the access point. In this way, when the station learns that the access point rejects the request content of the first wireless frame, it can obtain the secondary channel information recommended by the access point, and can further negotiate with the access point: whether to perform sensing or channel detection in the secondary channel corresponding to the secondary channel information recommended by the access point.

In combination with some embodiments of the first aspect, in some embodiments, the station further determines a fourth wireless frame; where the fourth wireless frame includes third identification information; the third identification information identifies that the station changes the sensing mode and/or a parameter of the secondary channel; and
sends the fourth wireless frame.

In the above embodiment, the station can change the supported sensing mode and/or parameter of the secondary channel according to the requirement of transmission service latency, and identify it through the third identification information, and determine and send a fourth wireless frame carrying the third identification information to the access point. In this way, the access point that receives the fourth wireless frame can sense or perform channel detection in the secondary channel in real time according to the changed sensing mode and/or parameter of the secondary channel supported by the station when the primary channel is busy, so as to adopt different mechanisms to plan communication resources for the station, and improve resource utilization, thereby improving data transmission rate and reducing transmission delay.

In combination with some embodiments of the first aspect, in some embodiments, the fourth wireless frame includes a secondary channel change frame;
the fourth wireless frame is an ultra-high reliability action frame (UHR) action frame, and a type of the frame is identified as the fourth wireless frame in the UHR action frame.

In the above embodiment, the fourth wireless frame is a UHR action frame, the type of the frame identified in the UHR action frame is the fourth wireless frame, and the fourth wireless frame includes a secondary channel change frame. In this way, the access point that receives the UHR action frame can determine the fourth wireless frame according to the type of the frame identified by the UHR action frame.

In a second aspect, an embodiment of the present disclosure provides a sensing mode negotiation method, the method including:
the access point receiving a first wireless frame; where the first wireless frame includes first identification information; the first identification information identifies a sensing mode in which a station monitors on a secondary channel when a primary channel is busy; the sensing mode includes simultaneous sensing and/or time-division sensing;
where the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively.

In the above embodiment, the first wireless frame carries first identification information, and the first identification information identifies: a sensing mode in which the station monitors on the secondary channel when the primary channel is busy; the sensing mode includes simultaneous sensing and/or time-division sensing; the simultaneous sensing indicates that the station supports simultaneous sensing or channel detection on at least two of the secondary channels; the time-division sensing indicates that the station supports: time-division one-to-one sensing or one-to-one channel detection on each of the secondary channels respectively. In this way, the access point that receives the first wireless frame can negotiate with the station on the mode the station senses on the secondary channel according to the sensing mode supported by the station when the primary channel is busy, and then, according to the negotiation result, enable the station to sense on the secondary channel, thereby adopting different mechanisms to plan communication resources for the station, and communicate with the station in the secondary channel, to improve the throughput of the communication system, and improve resource utilization, thereby improving data transmission rate, and reducing transmission delay.

In combination with some embodiments of the second aspect, in some embodiments, the first wireless frame also includes channel parameter information of the secondary channel supported by the station for sensing.

In combination with some embodiments of the second aspect, in some embodiments, the time-division sensing includes sensing sequence information;
the sensing sequence information identifies a sensing sequence for sensing or detecting each of the secondary channels.

In combination with some embodiments of the second aspect, in some embodiments, the sensing sequence includes: performing sensing or channel detection according to central frequency points of the secondary channels in an ascending or descending order.

In combination with some embodiments of the second aspect, in some embodiments, the sensing sequence information is carried in: the first wireless frame sent during an initial association process, or, in a second wireless frame sent after the initial association process is completed.

In combination with some embodiments of the second aspect, in some embodiments, the first wireless frame includes a sensing capability field; the sensing capability field includes a first sensing capability flag bit and/or a second sensing capability flag bit;
the first sensing capability flag bit identifies whether the station supports the simultaneous sensing;
the second sensing capability flag bit identifies whether the station supports the time-division sensing.

In combination with some embodiments of the second aspect, in some embodiments, the first wireless frame includes a secondary channel request frame, and the second wireless frame includes a secondary channel confirmation frame;
the first wireless frame and the second wireless frame are UHR action frames, and the UHR action frame identifies a type of the frame as the first wireless frame or the second wireless frame.

In combination with some embodiments of the second aspect, in some embodiments, after receiving the first wireless frame, the method further includes:
the access point determining a third wireless frame; where the third wireless frame includes second identification information, and the second identification information identifies whether the access point accepts a request content of the first wireless frame; and
sending the third wireless frame.

In combination with some embodiments of the second aspect, in some embodiments, the second identification information identifies that the access point rejects the request content of the first wireless frame, and the third wireless frame includes secondary channel information recommended by the access point.

In combination with some embodiments of the second aspect, in some embodiments, the access point receives a fourth wireless frame; where the fourth wireless frame includes third identification information; the third identification information identifies that the station changes the sensing mode and/or a parameter of the secondary channel.

In combination with some embodiments of the second aspect, in some embodiments, the fourth wireless frame includes a secondary channel change frame;
the fourth wireless frame is a UHR action frame, and a type of the frame is identified as the fourth wireless frame in the UHR action frame.

In a third aspect, an embodiment of the present disclosure further provides a station, the station including at least one of a determination module and a sending module; where the station is configured to execute the optional implementations of the first aspect.

In a fourth aspect, an embodiment of the present disclosure further provides an access point, including: a first receiving module; where the access point is configured to execute the optional implementations of the second aspect.

In a fifth aspect, an embodiment of the present disclosure further provides a station, including:
one or more processors;
where the station is configured to execute the optional implementations of the first aspect.

In a sixth aspect, an embodiment of the present disclosure further provides an access point, including:
one or more processors;
where the access point is configured to execute the optional implementations of the second aspect.

In a seventh aspect, an embodiment of the present disclosure further provides a communication system, including a station and a second access point; where the station is configured to execute the optional implementations as described in the first aspect, and the second access point is configured to execute the optional implementations as described in the second aspect.

In an eighth aspect, an embodiment of the present disclosure further provides a storage medium storing instructions, which, when executed on a communication device, enables the communication device to execute the optional implementations described in the first, second, and third aspects.

In a ninth aspect, an embodiment of the present disclosure proposes a program product. When the program product is executed by a communication device, the communication device executes the method described in the optional implementations of the first aspect, the second aspect, and the third aspect.

In a tenth aspect, an embodiment of the present disclosure proposes a computer program, which, when executed on a computer, enables the computer to execute the method described in the optional implementations of the first aspect, the second aspect, and the third aspect.

In an eleventh aspect, an embodiment of the present disclosure provides a chip or a chip system, which includes a processing circuit configured to execute the method described in the optional implementations of the first aspect, the second aspect, and the third aspect.

It is understandable that the above-mentioned station, second access point, communication system, storage medium, program product, computer program, chip or chip system are all configured to execute the methods proposed in the embodiments of the present disclosure. Therefore, the beneficial effects that can be achieved can refer to the beneficial effects in the corresponding methods, which will not be repeated here.

The embodiments of the present disclosure propose a sensing mode negotiation method, a station, an access point, and a communication system. In some embodiments, the sensing mode negotiation method, the signal transmission method, the wireless frame transmission method and other terms can be replaced with each other, and the information processing system, the communication system and other terms can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, "a plurality of" refers to two or more.

In some embodiments, the terms "at least one of", "one or more", "a plurality of", "multiple", etc. can be used interchangeably.

In some embodiments, "at least one of A and B", "A and/or B", "A in one case, B in another case", "in response to one case, A, in response to another case, B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal numbers before the "field" in the "first field" and the "second field" do not limit the position or order between the "fields", and the "first" and "second" do not limit whether the "fields" they modify are in the same message, nor do they limit the order of the "first field" and the "second field". For another example, if the description object is a "level", the ordinal numbers before the "level" in the "first level" and the "second level" do not limit the priority between the "levels". For another example, the number of description objects is not limited by the ordinal number, and can be one or more. Taking the "first apparatus" as an example, the number of "apparatuses" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "in response to...", "in response to determining...", "in the case of...", "at the time of...", "when...", "if...", "in case...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatus and device may be interpreted as physical or virtual, and their names are not limited to those described in the embodiments. In some cases, they may also be understood as "equipment", "device", "circuit", "network element", "node", "function", "unit", "section", "system", "network", "chip", "chip system", "entity", "subject", etc.

In some embodiments, "network" can be interpreted as the apparatus included in the network, such as an access network device, a core network device, etc.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

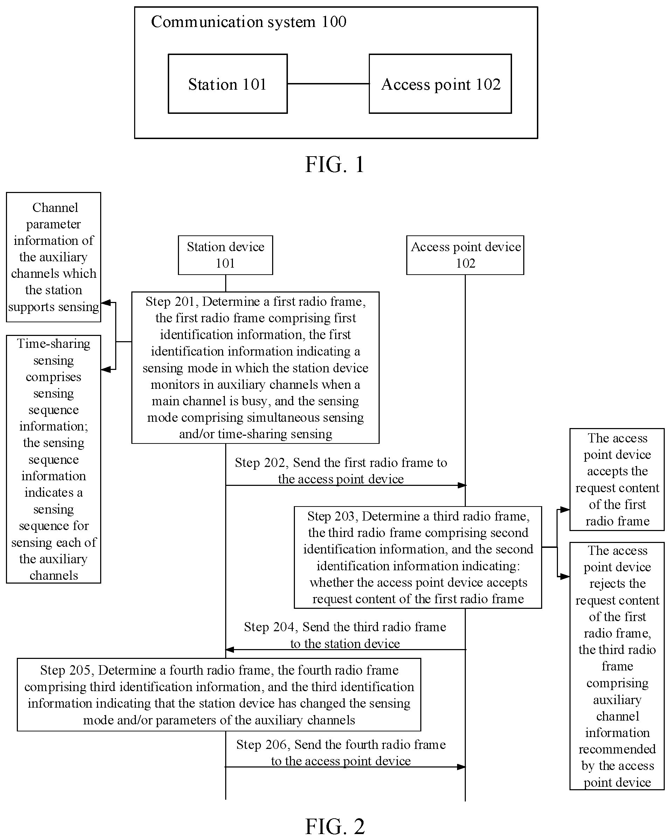

FIG. 1 is a schematic diagram of an architecture of a communication system according to an embodiment of the present disclosure.

As shown in FIG. 1, the communication system 100 includes a station device (Station, STA) 101 and an access point device (access point, AP) 102.

In some embodiments, the station 101 includes, for example, a wireless communication chip, a wireless sensor, or a wireless communication terminal that supports WiFi communication function. Optionally, the wireless communication terminal is, for example, at least one of a mobile phone, a wearable device, an Internet of Things device that supports WiFi communication function, a car with WiFi communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in a smart city, and a wireless terminal device in a smart home, but is not limited thereto.

Specifically, the station 101 may be a terminal device or a network device with a wireless fidelity (WiFi) chip. Optionally, the station 101 may support multiple WLAN standards such as 802.11ax, 802.11be, 802.11ac, 802.11n, 802.11g, 802.11b, 802.11bn, 802.11 bf and 802.11a, and support the next generation 802.11 protocol, but is not limited thereto.

In some embodiments, the access point 102 can be an access point for a mobile terminal to enter a wired network. The AP is equivalent to a bridge connecting a wired network and a wireless network. Its main function is to connect various wireless network clients together and then connect the wireless network to the Ethernet. Specifically, the AP can be a terminal device or a network device with a wireless fidelity chip. Optionally, the AP can support multiple WLAN standards such as 802.11ax, 802.11be, 802.11ac, 802.11n, 802.11g, 802.11b, 802.11bn, 802.11bf and 802.11a, as well as support the next generation 802.11 protocol, but is not limited thereto.

Optionally, in the embodiments of the present disclosure, AP and STA may be devices supporting multiple connections, for example, may be respectively represented as a multi-connection access point device (Access Point Multi-Link Device, AP MLD) and a multi-connection station device (Non-Access Point Multi-Link Device, Non-AP MLD); AP MLD may represent an access point supporting multi-link communication functions, and non-AP MLD may represent a station supporting multi-link communication functions.

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person of ordinary skill in the art can know that with the evolution of the system architecture and the emergence of new service scenarios, the technical solutions proposed in the embodiments of the present disclosure are also applicable to similar technical problems.

The following embodiments of the present disclosure may be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1. The number and form of the subjects are arbitrary, and the subjects may be physical or virtual. The connection relationship between the subjects is an example, the subjects may be connected or disconnected, and the connection may be in any manner, and may be a direct connection or an indirect connection, and may be a wired connection or a wireless connection.

The embodiments of the present disclosure can be applied to a wireless local area network (WLAN), such as a local area network using the 802.11 series of protocols. In a WLAN, a basic service set (BSS) is a basic component of a WLAN. A BSS network is composed of stations with certain associations within a specific coverage area. One case of association is that stations communicate directly with each other in an ad hoc network, which is called an independent BSS (IBSS). Another more common case is that in a BSS network, there is only one central station with a full-time management of the BSS, which is called an access point, and other stations in the BSS network that are not APs are called terminals, also called non-AP STAs, and APs and non-AP STAs are collectively referred to as STAs. When describing STAs, there is no need to distinguish between APs and non-AP STAs. In the same BSS network, due to distance, transmission power, etc., a STA cannot detect another STA that is far away from it, and the two STAs are hidden nodes of each other.

FIG. 2 is one of the interactive schematic diagrams of the sensing mode negotiation method according to an embodiment of the present disclosure. As shown in FIG. 2, the method includes the following steps.

**In step 201,** the station 101 determines a first wireless frame; where the first wireless frame includes first identification information; the first identification information identifies a sensing mode in which the station monitors on a secondary channel when a primary channel is busy; the sensing mode includes simultaneous sensing and/or time-division sensing.

The simultaneous sensing identifies that the station 101 supports sensing or channel detection on at least two of the secondary channels simultaneously; the time-division sensing identifies that the station 101 supports: time-division one-to-one sensing or one-to-one channel detection on each of the secondary channels respectively.

The station 101 and the access point 102 may communicate under the connection established therebetween, where there may be multiple channels under each connection, and the multiple channels may include a primary channel and a secondary channel.

In the existing 802.11 standard, if the primary channel is busy, the device cannot access the secondary channel or non-primary channel for communication, which may lead to low resource utilization. For example, in actual applications, there may be an AP that supports 160MHz bandwidth communication, while the STA can only support 20MHz or 40MHz bandwidth communication. If the primary channel 20MHz or 40MHz bandwidth is busy, the remaining 140MHz or 120MHz cannot be used for communication, resulting in low spectrum utilization.

In UHR, the transmission delay of some services needs to be guaranteed. If the device access channel manner in the existing 802.11 standard is used for service transmission, the latency of the service transmission may also be extended, which may not meet the low latency requirement. A mechanism is needed to strengthen the device access channel manner to meet the low latency requirement.

Optionally, the sensing capability information of the station 101 or the access point 102 for monitoring on the secondary channel can be determined according to the number of antennas or spatial stream (SS) supported by the station 101 or the access point 102, that is, it is determined whether the station 101 or the access point 102 supports sensing or channel detection on the secondary channel.

When the station 101 or the access point 102 supports sensing or channel detection on the secondary channel, it can be further determined that the station 101 or the access point 102 supports a sensing mode of monitoring on the secondary channel, that is, it is determined whether the station 101 or the access point 102 supports time-division sensing on the secondary channel, or supports simultaneous sensing on the secondary channel.

In some embodiments, the first wireless frame includes a sensing capability field; the sensing capability field includes a first sensing capability flag bit and/or a second sensing capability flag bit;
the first sensing capability flag bit identifies whether the station supports the simultaneous sensing;
the second sensing capability flag bit identifies whether the station supports the time-division sensing.

The first sensing capability flag bit and the second sensing capability flag bit can be identified by bits. For example, the sensing capability field can be set to include two bits, the first bit is used as the first sensing capability flag bit, and the second bit is used as the second sensing capability flag bit. The sensing capability of the station can be identified by setting the parameter value of the bit.

The first bit is used to identify whether the station 101 supports simultaneous sensing on the secondary channel when the primary channel is busy. For example, when the first bit is set to "1", it can be set to identify that the station 101 supports simultaneous sensing on the secondary channel when the primary channel is busy; when the first bit is set to "0", it can be set to identify that the station 101 does not support simultaneous sensing on the secondary channel when the primary channel is busy.

The second bit is used to identify whether the station 101 supports time-division sensing on the secondary channel when the primary channel is busy. For example, when the second bit is set to "1", it can be set that the station 101 supports time-division sensing on the secondary channel when the primary channel is busy; when the second bit is set to "0", it can be set that the station 101 does not support time-division sensing on the secondary channel when the primary channel is busy.

The setting of the parameter value of the first bit and the setting of the parameter value of the second bit may be independent of each other, that is, the first bit and the second bit may be set to "1" at the same time.

In the above embodiment, the specific manner in which the station 101 senses or performs channel detection in the secondary channel is identified by different sensing modes. In this way, the access point 102 that receives the first wireless frame can negotiate a secondary channel for performing sensing or channel detection through the station 101 according to the sensing mode supported by the station 101 when the primary channel is busy.

In the embodiment of the present disclosure, the sensing mode can be divided into simultaneous sensing and/or time-division sensing according to the different capabilities of the station 101 to sense or perform channel detection in the secondary channel. The station 101 carries the first identification information in the first wireless frame, and the first identification information identifies: the sensing mode in which the station 101 monitors in the secondary channel when the primary channel is busy. In this way, when the primary channel is busy, the station 101 can monitor in the secondary channel according to its corresponding sensing mode and sensing capability, which paves the way for subsequent communication with the access point 102 in the secondary channel, improving the throughput of the system, and reducing the transmission delay of low-latency services. For example, if the AP supports 160MHz bandwidth communication, and the STA can only support 40MHz bandwidth communication, then one 40MHz primary channel and three 40MHz secondary channels can be determined. If the 40MHz bandwidth of the primary channel is busy, it can be switched to the secondary channel and communicate through the 40MHz bandwidth of the secondary channel. If the STA supports simultaneous sensing, it can sense or perform channel detection in three secondary channels at the same time, and select one secondary channel for communication according to the sensing result. If the STA supports time-division sensing, each secondary channel can be sensed one by one or channel detection can be performed one by one, and one secondary channel can be selected for communication according to the sensing result.

In **step 202,** the station 101 sends the first wireless frame to the access point 102.

The access point 102 is an AP that maintains a communication connection with the station 101.

The station 101 sends a first wireless frame to the access point 102 to inform the access point 102 of the sensing mode in which the station 101 monitors on the secondary channel when the primary channel is busy; the sensing mode includes simultaneous sensing and/or time-division sensing. In this way, when the primary channel is busy, the access point 102 can negotiate with the station 101 on the mode of sensing the secondary channel according to the capability of the station 101 to sense or perform channel detection in the secondary channel, and then according to the negotiation result, enable the station to sense in the secondary channel, thereby communicating with the station 101 in the secondary channel, and using different mechanisms to allocate communication resources to the station 101, to improve resource utilization, and improve the throughput of the communication system, thereby improving the data transmission rate, and reducing the transmission delay. For example, when the access point 102 needs to transmit a downlink low-latency service to the station 101, it can use a corresponding mechanism to allocate communication resources for communication in the secondary channel to the station 101 according to the sensing mode in which the station 101 monitors on the secondary channel, so as to transmit the downlink low-latency service, to reduce the transmission delay.

In some embodiments, the first wireless frame further includes channel parameter information of the secondary channel supported by the station 101 for sensing.

The parameter information of the secondary channels may include the number of secondary channels. Optionally, the number of secondary channels may be set according to the working bandwidth supported by the station 101 and the working bandwidth supported by the access point 102.

For example, in the case that the station 101 supports a 20 MHz working bandwidth and the access point 102 supports a 160 MHz working bandwidth, one primary channel can be set and a maximum of seven secondary channels can be set. For another example, when the station 101 supports a 20 MHz working bandwidth and the access point 102 supports a 320 MHz working bandwidth, one primary channel can be set and a maximum of 15 secondary channels can be set.

In the above embodiment, by setting the channel parameter information of the secondary channel supported by the station for sensing in the first wireless frame, the access point that receives the first wireless frame can, when the primary channel is busy, negotiate the secondary channel for sensing or channel detection through the station 101 according to the sensing mode supported by the station and the channel parameter information of the secondary channel supported by the station for sensing, and adopt different mechanisms to plan communication resources for the station.

In some embodiments, the time-division sensing includes sensing sequence information;
the sensing sequence information identifies a sensing sequence for sensing or detecting each of the secondary channels.

In some embodiments, the sensing sequence includes: performing sensing or channel detection according to central frequency points of the secondary channels in an ascending or descending order.

The secondary channels can be directly arranged in order of their central frequency points, starting from the secondary channel with the lowest central frequency point in ascending order of frequencies of the central frequency points, each secondary channel can be sensed or channel detected in turn until the sensing of the secondary channel with the highest central frequency point is completed, and the sensing/channel detection (channel assess, CA) process is ended; or starting from the secondary channel with the highest central frequency point in descending order of the central frequency points, each secondary channel can be sensed or channel detected in turn until the sensing of the secondary channel with the lowest central frequency point is completed, and the sensing/channel detection process is ended. The embodiments of the present disclosure do not limit the specific sensing process.

In the embodiments of the present disclosure, it is also possible to arrange according to the high and low order of the center frequency points of the secondary channel and the center frequency point of the primary channel, with the center frequency point of the primary channel as the reference point, first the secondary channel whose center frequency point is lower than that of the primary channel is sensed or detected, and then the secondary channel whose center frequency point is higher than that of the primary channel is sensed or detected; or, it is also possible to first sense or detect the secondary channel whose center frequency point is higher than that of the primary channel, and then sense or detect the secondary channel whose center frequency point is lower than that of the primary channel. The embodiments of the present disclosure do not limit the specific sensing process.

For the secondary channels whose center frequency points are lower than that of the primary channel, it is possible to sense or perform channel detection on individual secondary channels in turn from the secondary channel with the highest center frequency point in descending order of the center frequency points, until the secondary channel with the lowest center frequency point is sensed, and the sensing/channel detection process is ended. For the secondary channels whose center frequency points are higher than that of the primary channel, the sensing or channel detection process is performed on individual secondary channels in turn in ascending order of the center frequency points, starting from the secondary channel with the lowest center frequency point, until the secondary channel with the highest center frequency point is sensed, and the sensing/channel detection process is ended.

It should be noted that in the embodiments of the present disclosure, when the secondary channels are sensed or channel detected, the sensing process is not limited to ending after the sensing or channel detection of all secondary channels is completed. The above is only an example. For example, when there are 7 secondary channels, the sensing process can be ended after the sensing or channel detection of 3 of the secondary channels is completed. Alternatively, when there are 7 secondary channels, after the sensing or channel detection of each secondary channel is completed in turn, if the primary channel is still busy, individual secondary channels can be sensed or channel detected again.

In some embodiments, the sensing sequence information is carried in: the first wireless frame sent during an initial association process.

Optionally, the first wireless frame may be initiated by the station 101 or the access point 102.

In some embodiments, the first wireless frame includes a secondary channel request frame; the first wireless frame is a UHR action frame, and the type of the frame is identified as the first wireless frame in the UHR action frame.

The UHR action frame may be provided with a flag bit, and the flag bit may be used to indicate that the frame type of the UHR action frame is the first wireless frame. For example, when the flag bit is set to 1, the frame type of the UHR action frame is the first wireless frame.

Optionally, a secondary channel request frame may be defined and some fields in the secondary channel request frame may be used to indicate the secondary channel sensing sequence information.

In some embodiments, the access point 102 may respond to the received secondary channel request frame via a secondary channel response frame.

In **step 203,** the access point 102 determines a third wireless frame; where the third wireless frame includes second identification information, and the second identification information identifies whether the access point 102 accepts the request content of the first wireless frame.

The third wireless frame can be a secondary channel response frame, and the second identification information can be indicated by a status field in the secondary channel response frame.

When the status field is set to success, it indicates that the access point 102 accepts the request content of the first wireless frame, that is, the access point 102 agrees to perform sensing or channel detection on the secondary channel according to the sensing mode of monitoring on the secondary channel, the channel parameter information of the secondary channel and the sensing sequence information determined by the station device 101 when the primary channel is busy. When the status field is set to declined_with_suggested, it indicates that the access point 102 does not accept/reject the request content of the first wireless frame.

In some embodiments, the second identification information identifies that the access point 102 rejects the request content of the first wireless frame, and the third wireless frame includes secondary channel information recommended by the access point 102.

The secondary channel information may include but is not limited to the sensing mode of the station 101 monitoring the secondary channel when the primary channel is busy, the channel parameter information of the secondary channel, and the sensing sequence information.

The access point 102 may determine the secondary channel information recommended by the access point 102 according to the sensing mode for monitoring on the secondary channel, the channel parameter information of the secondary channel, and the sensing sequence information determined by the station 101 when the primary channel is busy. For example, when the sensing sequence information determined by the station 101 is: performing sensing or channel detection on the secondary channels in ascending order of the frequencies of the central frequency points of the secondary channels, the secondary channel information recommended by the access point 102 may be: performing sensing or channel detection on the secondary channels in descending order of the frequencies of the central frequency points of the secondary channels.

In **step 204,** the access point 102 sends the third wireless frame to the station 101.

In **step 205,** the station 101 determines a fourth wireless frame; where the fourth wireless frame includes third identification information; the third identification information identifies that the station 101 changes the sensing mode and/or the parameter of the secondary channel.

Generally, the power consumption of simultaneous sensing is greater than that of time-division sensing, and the duration required for simultaneous sensing is generally less than that required for time-division sensing. In the embodiment of the present disclosure, the station 101 can determine whether to change the sensing mode and/or the parameter of the secondary channel according to the service latency requirement and the power consumption requirement of the device during the communication with the access point 102.

When the station 101 determines to change the sensing mode and/or the parameter of the secondary channel, the change information can be identified by fourth identification information, and the fourth identification information can be carried by the fourth wireless frame.

In some embodiments, the fourth wireless frame includes a secondary channel change frame;
the fourth wireless frame is an ultra-high reliability action frame (UHR action frame), and the type of this frame is identified as the fourth wireless frame in the UHR action frame.

The UHR action frame can be the above-mentioned UHR action frame or a newly defined UHR action frame.

A flag bit may be set in the UHR action frame to identify whether the frame type of the UHR action frame is the fourth wireless frame. For example, when the flag bit is set to 3, the frame type of the UHR action frame is the fourth wireless frame.

**In step 206,** the station 101 sends the fourth wireless frame to the access point 102.

In the embodiments of the present disclosure, the station 101 informs the access point 102 of the sensing mode that the station 101 monitors on the secondary channel, the channel parameter information of the secondary channel, and the sensing sequence information of time-division sensing when the primary channel is busy; the access point 102 feeds back to the station 101 whether to accept the request content of the first wireless frame, so that the station 101 and the access point 102 can negotiate the sensing mode of the station 101 on the secondary channel; the station 101 informs the access point 102 of the information that the sensing mode and/or the parameter of the secondary channel are changed, and renegotiates the sensing mode of the station 101 on the secondary channel. In this way, when the primary channel is busy, the access point 102 can negotiate with the station 101 on the sensing mode of the secondary channel according to the capability of the station 101 to sense or perform channel detection in the secondary channel in real time, and then according to the negotiation result, the station 101 senses or performs channel detection on the secondary channel, so as to communicate in the secondary channel according to the sensing result, and adopt a corresponding mechanism to allocate communication resources to the station 101, to improving resource utilization, thereby improving data transmission rate, and reducing transmission delay.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "bit", "data", "program", and "chip" can be used interchangeably.

In some embodiments, terms such as "moment", "time point", "time", and "time position" can be interchangeable, and terms such as "duration", "period", "time window", "window", and "time" can be interchangeable.

In some embodiments, terms such as wireless access scheme and waveform may be used interchangeably.

In some embodiments, terms such as "certain", "preseted", "predetermined", "set", "indicated", "some", "any", and "first" can be interchangeable, and "specific A", "preset A", "predetermined A", "set A", "indicated A", "some A", "any A", and "first A" can be interpreted as A pre-defined in a protocol, etc., or as A obtained through setting, configuration, or indication, etc., and can also be interpreted as specific A, some A, any A, or first A, etc., but is not limited thereto.

In some embodiments, the determination or judgment can be performed by a value represented by 1 bit (0 or 1), by a true or false value (Boolean value) represented by true or false, or by comparison of numerical values (for example, comparison with a predetermined value), but is not limited thereto.

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

The sensing mode negotiation method involved in the embodiments of the present disclosure can include at least one of the aforementioned steps and embodiments. For example, step 201 can be implemented as an independent embodiment, step 203 can be implemented as an independent embodiment, and step 205 can be implemented as an independent embodiment; the combination of step 201 and step 202 can be implemented as an independent embodiment, the combination of step 203 and step 204 can be implemented as an independent embodiment, and the combination of step 204 and step 205 can be implemented as an independent embodiment, but is not limited thereto.

In some embodiments, reference may be made to other optional implementations recorded before or after the description corresponding to FIG. 2.

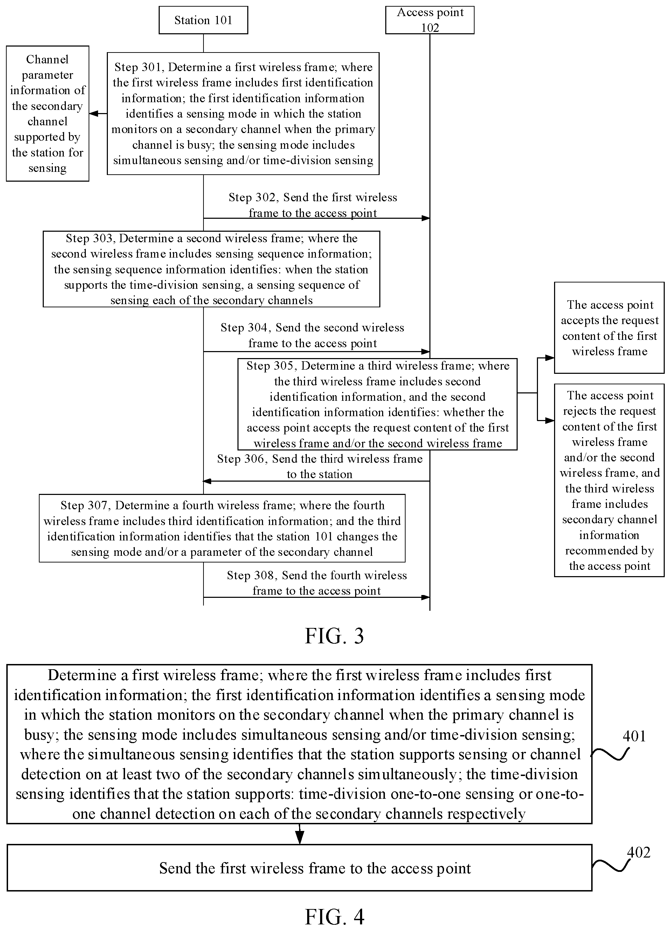

FIG. 3 is a second interactive schematic diagram of a sensing mode negotiation method according to an embodiment of the present disclosure. As shown in FIG. 2, the method includes the following steps.

**In step 301,** the station 101 determines a first wireless frame; where the first wireless frame includes first identification information; the first identification information identifies a sensing mode in which the station monitors on a secondary channel when the primary channel is busy; the sensing mode includes simultaneous sensing and/or time-division sensing.

The simultaneous sensing identifies that the station 101 supports sensing or channel detection on at least two of the secondary channels simultaneously; the time-division sensing identifies that the station 101 supports: time-division one-to-one sensing or one-to-one channel detection on each of the secondary channels.

In some embodiments, the first wireless frame includes a sensing capability field; the sensing capability field includes a first sensing capability flag bit and/or a second sensing capability flag bit;
the first sensing capability flag bit identifies whether the station supports the simultaneous sensing;
the second sensing capability flag bit identifies whether the station supports the time-division sensing.

The optional implementation of step 301 can refer to the optional implementation of step 201 in FIG. 2 and other related parts in the embodiment involved in FIG. 2, which will not be described in detail here.

In **step 302,** the station 101 sends the first wireless frame to the access point 102.

The access point 102 is an AP that maintains a communication connection with the station 101.

In some embodiments, the station 101 sends the first wireless frame during a process of establishing an initial association with the access point 102.

In some embodiments, the first wireless frame further includes channel parameter information of the secondary channel supported by the station 101 for sensing.

The optional implementation of step 302 can refer to the optional implementation of step 202 in FIG. 2 and other related parts in the embodiment involved in FIG. 2, which will not be described in detail here.

In **step 303,** the station 101 determines a second wireless frame; where the second wireless frame includes sensing sequence information; the sensing sequence information identifies: when the station supports the time-division sensing, a sensing sequence of sensing or detecting each of the secondary channels.

In **step 304,** the station 101 sends the second wireless frame to the access point 102.

In some embodiments, the station 101 sends the second wireless frame after establishing the initial association with the access point 102.

Optionally, the first wireless frame and the second wireless frame may be initiated by the station 101 or by the access point 102.

In some embodiments, the first wireless frame includes a secondary channel request frame, and the second wireless frame includes a secondary channel confirmation frame;
the first wireless frame and the second wireless frame are UHR action frames, and the UHR action frame identifies the type of the frame as the first wireless frame or the second wireless frame.

The identification bit may be set in the UHR action frame to identify the frame type of the UHR action frame as the first wireless frame or the second wireless frame. For example, when the identification bit is set to 1, the frame type of the UHR action frame is the first wireless frame. When the identification bit is set to 2, the frame type of the UHR action frame is the second wireless frame.

The secondary channel confirmation frame may be defined and some fields in the secondary channel confirmation frame may be used to indicate the secondary channel sensing sequence information.

In some embodiments, the access point 102 may respond to the received secondary channel request frame with a secondary channel response frame. The access point 102 may respond to the received secondary channel confirmation frame with an ACK frame.

In **step 305,** the access point 102 determines a third wireless frame; where the third wireless frame includes second identification information, and the second identification information identifies whether the access point 102 accepts the request content of the first wireless frame and/or the second wireless frame.

In some embodiments, the second identification information identifies that the access point 102 rejects the request content of the first wireless frame and/or the second wireless frame, and the third wireless frame includes secondary channel information recommended by the access point 102.

The optional implementation of step 305 can refer to the optional implementation of step 203 in FIG. 2 and other related parts in the embodiment involved in FIG. 2, which will not be described in detail here.

In **step 306,** the access point 102 sends the third wireless frame to the station 101.

The optional implementation of step 305 can refer to the optional implementation of step 204 in FIG. 2 and other related parts in the embodiment involved in FIG. 2, which will not be described in detail here.

In **step 307,** the station 101 determines a fourth wireless frame; where the fourth wireless frame includes third identification information; and the third identification information identifies that the station 101 changes the sensing mode and/or a parameter of the secondary channel.

In some embodiments, the fourth wireless frame includes a secondary channel change frame;
the fourth wireless frame is an ultra-high reliability action frame (UHR action frame), and the UHR action frame identifies the type of the frame as the fourth wireless frame.

The optional implementation of step 305 can refer to the optional implementation of step 205 in FIG. 2 and other related parts in the embodiment involved in FIG. 2, which will not be described in detail here.

In **step 308,** the station 101 sends the fourth wireless frame to the access point 102.

The optional implementation of step 305 can refer to the optional implementation of step 206 in FIG. 2 and other related parts in the embodiment involved in FIG. 2, which will not be described in detail here.

In the embodiment of the present disclosure, the station 101 informs the access point 102 of the sensing mode that the station 101 monitors on the secondary channel, channel parameter information of the secondary channel, and sensing sequence information of time-division sensing when the primary channel is busy; the access point 102 feeds back to the station 101 whether to accept the request content of the first wireless frame, so that the station 101 and the access point 102 can negotiate the sensing mode of the station 101 on the secondary channel; the station 101 informs the access point 102 of the information that the sensing mode and/or the parameter of the secondary channel are changed, and renegotiates the sensing mode of the station 101 on the secondary channel. In this way, when the primary channel is busy, the access point 102 can negotiate with the station 101 on the sensing mode of the secondary channel according to the capability of the station 101 to sense or perform channel detection in the secondary channel in real time, and then according to the negotiation result, the station 101 senses or performs channel detection on the secondary channel, so as to communicate in the secondary channel according to the sensing result, and adopt a corresponding mechanism to allocate communication resources to the station 101, to improve resource utilization, thereby improving data transmission rate, and reducing transmission delay.

The sensing mode negotiation method involved in the embodiments of the present disclosure can include at least one of the aforementioned steps and embodiments. For example, step 301 can be implemented as an independent embodiment, step 303 can be implemented as an independent embodiment, step 305 can be implemented as an independent embodiment, and step 307 can be implemented as an independent embodiment; the combination of step 301 and step 302 can be implemented as an independent embodiment, the combination of step 303 and step 304 can be implemented as an independent embodiment, the combination of step 305 and step 306 can be implemented as an independent embodiment, and the combination of step 307 and step 308 can be implemented as an independent embodiment, but is not limited thereto.

In some embodiments, reference may be made to other optional implementations recorded before or after the description corresponding to FIG. 3.

FIG. 4 is one of the flowcharts of the sensing mode negotiation method according to an embodiment of the present disclosure.

As shown in FIG. 4, the above method may be applied to the station 101, and the above method includes the following steps.

In **step 401,** the station 101 determines a first wireless frame; where the first wireless frame includes first identification information; the first identification information identifies a sensing mode in which the station monitors on the secondary channel when the primary channel is busy; the sensing mode includes simultaneous sensing and/or time-division sensing;
where the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively.

The optional implementation of step 401 can refer to the optional implementation of step 201 in FIG. 2 and other related parts in the embodiment involved in FIG. 2, which will not be described in detail here.

In **step 402,** the station 101 sends the first wireless frame to the access point 102.

In some embodiments, the first wireless frame further includes channel parameter information of the secondary channel supported by the station 101 for sensing.

In some embodiments, the time-division sensing includes sensing sequence information;
the sensing sequence information identifies a sensing sequence for sensing or detecting each of the secondary channels.

In some embodiments, the sensing sequence includes: performing sensing or channel detection according to a high and low order of central frequency points of the secondary channels.

In some embodiments, the sensing sequence information is carried in: the first wireless frame sent during the initial association process, or in the second wireless frame sent after the initial association process is completed.

In some embodiments, the first wireless frame includes a secondary channel request frame, and the second wireless frame includes a secondary channel confirmation frame;
the first wireless frame and the second wireless frame are UHR action frames, and the UHR action frame identifies the type of the frame as the first wireless frame or the second wireless frame.

The optional implementation of step 402 can refer to the optional implementation of step 202 in FIG. 2, the optional implementation of step 304 in FIG. 3, the embodiment involved in FIG. 2 and other related parts in the embodiment involved in FIG. 3, which will not be repeated here.

In **step 403,** the station 101 determines a third wireless frame; where the third wireless frame includes second identification information, and the second identification information identifies whether the access point 102 accepts the request content of the first wireless frame.

The third wireless frame can be a secondary channel response frame, and the second identification information can be indicated by a status field in the secondary channel response frame.

In some embodiments, the second identification information identifies that the access point 102 rejects the request content of the first wireless frame, and the third wireless frame includes secondary channel information recommended by the access point 102.

The optional implementation of step 403 can refer to the optional implementation of step 203 and step 204 in FIG. 2, and other related parts in the embodiment involved in FIG. 2, which will not be described in detail here.

In **step 404,** the station 101 determines a fourth wireless frame; where the fourth wireless frame includes third identification information; the third identification information identifies that the station 101 changes the sensing mode and/or the parameter of the secondary channel.

In some embodiments, the fourth wireless frame includes a secondary channel change frame;
the fourth wireless frame is an ultra-high reliability action frame (UHR action frame), and the type of the frame is identified as the fourth wireless frame in the UHR action frame.

The optional implementation of step 404 can refer to the optional implementation of step 205 in FIG. 2 and other related parts in the embodiment involved in FIG. 2, which will not be described in detail here.

In **step 405,** the station 101 sends the fourth wireless frame to the access point 102.

The optional implementation of step 405 can refer to the optional implementation of step 206 in FIG. 2 and other related parts in the embodiment involved in FIG. 2, which will not be described in detail here.

In the embodiment of the present disclosure, the station 101 informs the access point 102 of the sensing mode of the station 101 monitors on the secondary channel, channel parameter information of the secondary channel, and sensing sequence information of time-division sensing when the primary channel is busy; the station 101 receives the information fed back by the access point 102 to the station 101 whether to accept the request content of the first wireless frame, so that the station 101 and the access point 102 can negotiate the mode in which the station 101 senses in the secondary channel; the station 101 informs the access point 102 of information that the sensing mode and/or the parameter of the secondary channel change, and renegotiates the mode of sensing by the station 101 in the secondary channel. In this way, when the primary channel is busy, the access point 102 can negotiate with the station 101 on the mode of sensing the secondary channel in real time according to the capability of the station 101 to sense or detect the channel in the secondary channel, and then according to the negotiation result, enable the station 101 to sense or detect the channel in the secondary channel, so as to communicate in the secondary channel according to the sensing result, and adopt a corresponding mechanism to allocate communication resources to the station 101, to improve resource utilization, thereby improving data transmission rate and reducing transmission delay.

The sensing mode negotiation method involved in the embodiments of the present disclosure can include at least one of the aforementioned steps and embodiments. For example, step 401 can be implemented as an independent embodiment, step 403 can be implemented as an independent embodiment, and step 404 can be implemented as an independent embodiment; the combination of step 401 and step 402 can be implemented as an independent embodiment, and the combination of step 404 and step 405 can be implemented as an independent embodiment, but is not limited thereto.

In some embodiments, reference may be made to other optional implementations recorded before or after the description corresponding to FIG. 4.

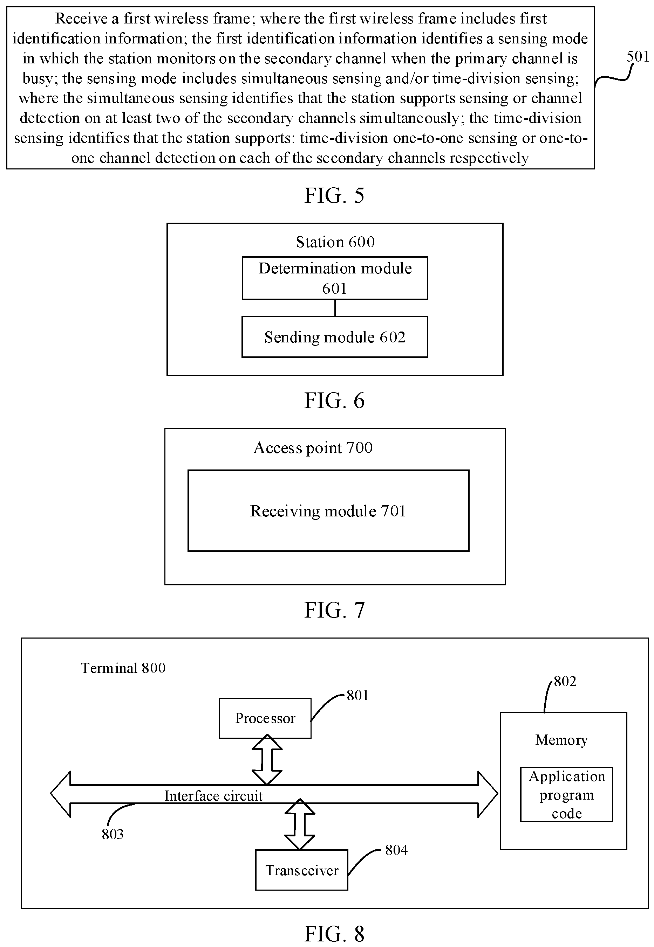

FIG. 5 is a second flowchart of the sensing mode negotiation method according to an embodiment of the present disclosure.

As shown in FIG. 5, the above method may be applied to an access point 102, and the above method includes the following steps.

In **step 501,** the access point 102 receives a first wireless frame; where the first wireless frame includes first identification information; the first identification information identifies a sensing mode in which the station monitors on the secondary channel when the primary channel is busy; the sensing mode includes simultaneous sensing and/or time-division sensing;
where the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively.

In some embodiments, the first wireless frame further includes channel parameter information of the secondary channel supported by the station 101 for sensing.

In some embodiments, the time-division sensing includes sensing sequence information;
the sensing sequence information identifies a sensing sequence for sensing or detecting each of the secondary channels.

In some embodiments, the sensing sequence includes: performing sensing or channel detection according to central frequency points of the secondary channels in an ascending or descending order.

In some embodiments, the sensing sequence information is carried in: the first wireless frame sent by the station 101 during the initial association process, or in a second wireless frame sent by the station 101 after the initial association process is completed.

In some embodiments, the first wireless frame includes a secondary channel request frame, and the second wireless frame includes a secondary channel confirmation frame;
the first wireless frame and the second wireless frame are UHR action frames, and the type of the frame is identified as the first wireless frame or the second wireless frame in the UHR action frame.

The optional implementation of step 501 can refer to the optional implementation of step 201 and step 202 in FIG. 2, the optional implementation of step 304 in FIG. 3, the embodiment involved in FIG. 2 and other related parts in the embodiment involved in FIG. 3, which will not be repeated here.

In **step 502,** the access point 102 determines a third wireless frame; where the third wireless frame includes second identification information, and the second identification information identifies whether the access point 102 accepts a request content of the first wireless frame.

In some embodiments, the second identification information identifies that the access point 102 rejects the request content of the first wireless frame, and the third wireless frame includes secondary channel information recommended by the access point 102.

The optional implementation of step 502 can refer to the optional implementation of step 203 in FIG. 2 and other related parts in the embodiment involved in FIG. 2, which will not be described in detail here.

In **step 503,** the access point 102 sends the third wireless frame to the station 101.

The optional implementation of step 503 can refer to the optional implementation of step 204 in FIG. 2 and other related parts in the embodiment involved in FIG. 2, which will not be described in detail here.

In **step 504,** the access point 102 receives a fourth wireless frame; where the fourth wireless frame includes third identification information; and the third identification information identifies that the station 101 changes the sensing mode and/or a parameter of the secondary channel.

In some embodiments, the fourth wireless frame includes a secondary channel change frame;
the fourth wireless frame is an ultra-high reliability action frame (UHR action frame), and a type of the frame is identified as the fourth wireless frame in the UHR action frame.

The optional implementation of step 504 can refer to the optional implementation of step 205 and step 206 in FIG. 2, and other related parts in the embodiment involved in FIG. 2, which will not be described in detail here.

In the embodiment of the present disclosure, the access point 102 receives information notified by the station 101: the sensing mode that the station 101 monitors on the secondary channel, channel parameter information of the secondary channel, and sensing sequence information of time-division sensing when the primary channel is busy; the access point 102 feeds back to the station 101 whether to accept the request content of the first wireless frame, so that the station 101 and the access point 102 can negotiate the sensing mode of the station 101 in the secondary channel; the station 101 notifies the access point 102 of the information of the change of the sensing mode and/or the parameter of the secondary channel, and renegotiates the sensing mode of the station 101 in the secondary channel. In this way, when the primary channel is busy, the access point 102 can negotiate with the station 101 in real time according to the capability of the station 101 to sense or perform channel detection in the secondary channel, and then according to the negotiation result, make the station 101 to sense or perform channel detection in the secondary channel, so as to communicate in the secondary channel according to the sensing result, and adopt the corresponding mechanism to allocate communication resources to the station 101 to improve resource utilization, thereby improving data transmission rate and reducing transmission delay.

The embodiments of the present disclosure also propose an apparatus for implementing any of the above methods, for example, an apparatus is proposed, the above apparatus includes a unit or module for implementing each step performed by the terminal in any of the above methods. For another example, another apparatus is also proposed, including a unit or module for implementing each step performed by the network device (such as an access network device, a core network function node, a core network device, etc.) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuits. The hardware circuits may be understood as one or more processors; for example, in one implementation, the hardware circuits are application-specific integrated circuits (ASICs), and the functions of some or all of the above units or modules may be implemented by designing the logical relationship of the components in the circuits; for another example, in another implementation, the hardware circuits may be implemented by programmable logic devices (PLDs), and Field Programmable Gate Arrays (FPGAs) may be used as an example, which may include a large number of logic gate circuits, and the connection relationship between the logic gate circuits may be configured by configuring the configuration files, thereby implementing the functions of some or all of the above units or modules. All units or modules of the above apparatuses may be implemented in the form of software called by the processor, or in the form of hardware circuits, or in the form of software called by the processor, and the remaining part may be implemented in the form of hardware circuits.

In the embodiments of the present disclosures, the processor is a circuit with signal processing capability. In one implementation, the processor may be a circuit with instruction reading and execution capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as ASIC, such as Neural Network Processing Unit (NPU), Tensor Processing Unit (TPU), Deep Learning Processing Unit (DPU), etc.

FIG. 6 is one of the structural diagrams of the station proposed in the embodiment of the present disclosure. As shown in FIG. 6, the station 600 may include: at least one of a determination module 601, a sending module 602, and the like.

In some embodiments, the above-mentioned determination module 601 is configured to determine a first wireless frame; where the first wireless frame includes first identification information; the first identification information identifies a sensing mode in which the station monitors on a secondary channel when the primary channel is busy; the sensing mode includes simultaneous sensing and/or time-division sensing; where the simultaneous sensing indicates that the station supports simultaneous sensing or channel detection on at least two of the secondary channels; the time-division sensing indicates that the station supports: time-division one-to-one sensing or one-to-one channel detection on each of the secondary channels; the sending module 602 is configured to send the first wireless frame to the access point.

Optionally, the determination module 601 is configured to execute at least one of the communication steps (e.g., step 201, step 205, step 301, step 303, step 307, step 401, step 404, but not limited thereto) executed by the station 101 in any of the above methods, which are not be described in detail here. The sending module 602 is configured to execute at least one of the sending and receiving steps (e.g., step 202, step 204, step 206, step 302, step 304, step 308, step 402, step 403, step 405, step 501, step 504) executed by the station 101 in any of the above methods, which are not be described in detail here.

FIG. 7 is a schematic diagram of a structure of an access point according to an embodiment of the present disclosure. As shown in FIG. 7, the access point 700 may include: a receiving module 701.

In some embodiments, the receiving module 701 is configured to receive a first wireless frame;
where the first wireless frame includes first identification information; the first identification information identifies a sensing mode in which the station monitors on the secondary channel when the primary channel is busy; the sensing mode includes simultaneous sensing and/or time-division sensing;

the simultaneous sensing identifies that the station supports performing sensing or channel detection on at least two of the secondary channels at the same time; the time-division sensing identifies that the station supports: time-division one-to-one sensing or one-to-one channel detection on each of the secondary channels.

Optionally, the receiving module 701 is configured to execute at least one of the sending and receiving steps (e.g., step 202, step 204, step 206, step 302, step 304, step 308, step 402, step 403, step 405, step 501, step 504) performed by the access point 102 in any of the above methods, which are not be repeated here.

Optionally, the access point 700 may further include a determination module, which is configured to execute at least one of the communication steps (such as step 203, step 305, step 502, but not limited thereto) performed by the access point 102 in any of the above methods, which are not be described in detail here.

FIG. 8 is a schematic diagram of the structure of a terminal 800 (e.g., user equipment, etc.) proposed in an embodiment of the present disclosure. The terminal 800 may be a chip, a chip system, or a processor, etc. that supports a network device to implement any of the above methods, or may be a chip, a chip system, or a processor, etc. that supports a terminal to implement any of the above methods. The terminal 800 may be used to implement the method described in the above method embodiment, and the details may refer to the description in the above method embodiments.

As shown in FIG. 8, the terminal 800 includes one or more processors 801. The processor 801 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. The terminal 800 is used to execute any of the above methods.

In some embodiments, the terminal 800 further includes one or more memories 802 for storing instructions. Optionally, all or part of the memory 802 may also be outside the terminal 800.

In some embodiments, the terminal 800 further includes one or more transceivers 804. When the terminal 800 includes one or more transceivers 804, the transceiver 804 performs at least one of the sending and/or receiving steps (e.g., step 202, step 204, step 206, step 302, step 304, step 308, step 402, step 403, step 405, step 501, step 504) in the above methods, and the processor 801 performs at least one of the other steps (e.g., step 201, step 203, step 205, step 301, step 303, step 305, step 307, step 401, step 404, step 502, but not limited thereto).

In some embodiments, the transceiver may include a receiver and/or a transmitter, and the receiver and the transmitter may be separate or integrated. Optionally, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

In some embodiments, the terminal 800 may include one or more interface circuits 803. Optionally, the interface circuit 803 is connected to the memory 802, and the interface circuit 803 may be used to receive signals from the memory 802 or other apparatuses, and may be used to send signals to the memory 802 or other apparatuses. For example, the interface circuit 803 may read instructions stored in the memory 802 and send the instructions to the processor 801.

The terminal 800 described in the above embodiment may be a communication device such as a user device, but the scope of the terminal 800 described in the present disclosure is not limited thereto, and the structure of the terminal 800 may not be limited by FIG. 8. The communication device may be an independent device or may be part of a relatively large device. For example, the communication device may be: (1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

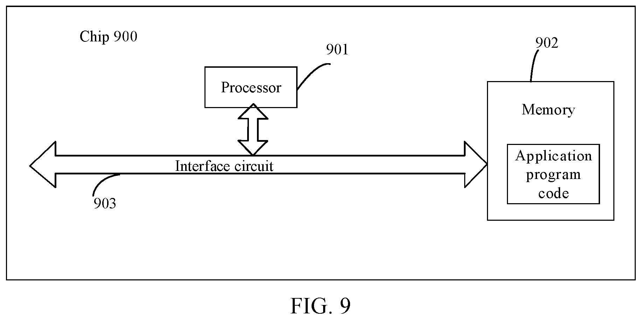

FIG. 9 is a schematic diagram of the structure of a chip 900 provided in an embodiment of the present disclosure. In the case where the terminal 1300 may be a chip or a chip system, reference may be made to the schematic diagram of the structure of the chip 900 shown in FIG. 9, but the present disclosure is not limited thereto.

The chip 900 includes one or more processors 901, and the chip 900 is used to execute any of the above methods.

In some embodiments, the chip 900 further includes one or more 903. Optionally, the interface circuit 903 is connected to the memory 902, and the interface circuit 903 can be used to receive signals from the memory 902 or other apparatuses, and the interface circuit 903 can be used to send signals to the memory 902 or other apparatuses. For example, the interface circuit 903 can read the instructions stored in the memory 902 and send the instructions to the processor 901.

In some embodiments, the interface circuit 903 performs at least one of the communication steps such as sending and/or receiving in the above methods (for example, step 202, step 204, step 206, step 302, step 304, step 308, step 402, step 403, step 405, step 501, step 504, but not limited thereto), and the processor 901 performs at least one of the other steps (for example, step 201, step 203, step 205, step 301, step 303, step 305, step 307, step 401, step 404, step 502, but not limited thereto).

In some embodiments, terms such as interface circuit, interface, transceiver pin, and transceiver may be used interchangeably.

In some embodiments, the chip 900 further includes one or more memories 902 for storing instructions. Alternatively, all or part of the memory 902 may be outside the chip 900.

The present disclosure also proposes a storage medium, on which instructions are stored, and when the instructions are executed on the terminal 800, the terminal 800 executes any of the above methods. Optionally, the storage medium is an electronic storage medium. Optionally, the storage medium is a computer-readable storage medium, but is not limited thereto, and it can also be a storage medium readable by other apparatuses. Optionally, the storage medium can be a non-transitor8 storage medium, but is not limited thereto, and it can also be a temporary storage medium.

The present disclosure also proposes a program product, and when the program product is executed by the terminal 800, the terminal 800 executes any of the above methods. Optionally, the program product is a computer program product.

The present disclosure also proposes a computer program, which, when executed on a computer, causes the computer to execute any one of the above methods.

## Claims

1. A sensing mode negotiation method, comprising:
determining, by a station, a first wireless frame; wherein the first wireless frame comprises first identification information; the first identification information identifies a sensing mode in which the station monitors on a secondary channel when a primary channel is busy; the sensing mode comprises simultaneous sensing and/or time-division sensing;
wherein the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively; and
sending the first wireless frame.

2. The sensing mode negotiation method according to claim 1, wherein the first wireless frame further comprises channel parameter information of the secondary channel supported by the station for sensing.

3. The sensing mode negotiation method according to claim 1 or 2, wherein the time-division sensing comprises sensing sequence information; and
the sensing sequence information identifies a sensing sequence for sensing or detecting each of the secondary channels.

4. The sensing mode negotiation method according to claim 3, wherein the sensing sequence comprises: performing sensing or channel detection according to central frequency points of the secondary channels in an ascending or descending order.

5. The sensing mode negotiation method according to claim 3, wherein the sensing sequence information is carried in: the first wireless frame sent during an initial association process, or in a second wireless frame sent after the initial association process is completed.

6. The method according to claim 1, wherein the first wireless frame comprises a sensing capability field; the sensing capability field comprises a first sensing capability flag bit and/or a second sensing capability flag bit;
the first sensing capability flag bit identifies whether the station supports the simultaneous sensing;
the second sensing capability flag bit identifies whether the station supports the time-division sensing.

7. The sensing mode negotiation method according to claim 1, wherein after sending the first wireless frame, the method further comprises:
receiving a third wireless frame sent by an access point; wherein the third wireless frame comprises second identification information, and the second identification information identifies whether the access point accepts a request content of the first wireless frame.

8. The sensing mode negotiation method according to claim 7, wherein the second identification information identifies that the access point rejects the request content of the first wireless frame, and the third wireless frame comprises secondary channel information recommended by the access point.

9. The sensing mode negotiation method according to claim 1, further comprising:
determining a fourth wireless frame; wherein the fourth wireless frame comprises third identification information; the third identification information identifies that the station changes the sensing mode and/or a parameter of the secondary channel; and
sending the fourth wireless frame.

10. A sensing mode negotiation method, comprising:
receiving, by an access point, a first wireless frame; wherein the first wireless frame comprises first identification information; the first identification information identifies a sensing mode in which a station monitors on a secondary channel when a primary channel is busy; the sensing mode comprises simultaneous sensing and/or time-division sensing;
wherein the simultaneous sensing identifies that the station supports sensing or channel detection on at least two of the secondary channels simultaneously; the time-division sensing identifies that the station supports: time-division one-to-one sensing or one-to-one channel detection on each of the secondary channels respectively.

11. The sensing mode negotiation method according to claim 10, wherein the first wireless frame further comprises channel parameter information of the secondary channel supported by the station for sensing.

12. The sensing mode negotiation method according to claim 10 or 11, wherein the time-division sensing comprises sensing sequence information; and
the sensing sequence information identifies a sensing sequence for sensing or detecting each of the secondary channels.

13. The sensing mode negotiation method according to claim 12, wherein the sensing sequence comprises: performing sensing or channel detection according to central frequency points of the secondary channels in an ascending or descending order.

14. The sensing mode negotiation method according to claim 12, wherein the sensing sequence information is carried in: the first wireless frame sent during an initial association process, or in a second wireless frame sent after the initial association process is completed.

15. The method according to claim 10, wherein the first wireless frame comprises a sensing capability field; the sensing capability field comprises a first sensing capability flag bit and/or a second sensing capability flag bit;
the first sensing capability flag bit identifies whether the station supports the simultaneous sensing;
the second sensing capability flag bit identifies whether the station supports the time-division sensing.

16. The sensing mode negotiation method according to claim 10, wherein after receiving the first wireless frame, the method further comprises:
determining, by the access point, a third wireless frame; wherein the third wireless frame comprises second identification information, and the second identification information identifies whether the access point accepts a request content of the first wireless frame; and
sending the third wireless frame.

17. The sensing mode negotiation method according to claim 16, wherein the second identification information identifies that the access point rejects the request content of the first wireless frame, and the third wireless frame comprises secondary channel information recommended by the access point.

18. The sensing mode negotiation method according to claim 10, further comprising:
receiving, by the access point, a fourth wireless frame; wherein the fourth wireless frame comprises third identification information; and the third identification information identifies that the station changes the sensing mode and/or a parameter of the secondary channel.

19. A station, comprising:
a determination module, configured to determine a first wireless frame; wherein the first wireless frame comprises first identification information; the first identification information identifies a sensing mode in which the station monitors on a secondary channel when a primary channel is busy; the sensing mode comprises simultaneous sensing and/or time-division sensing;
wherein the simultaneous sensing identifies that the station supports sensing or channel detection on at least two of the secondary channels simultaneously; the time-division sensing identifies that the station supports: time-division one-to-one sensing on each of the secondary channels respectively; and
a sending module, configured to send the first wireless frame.

20. An access point, comprising:
a receiving module, configured to receive a first wireless frame; wherein the first wireless frame comprises first identification information; the first identification information identifies a sensing mode in which a station monitors on a secondary channel when a primary channel is busy; the sensing mode comprises simultaneous sensing and/or time-division sensing;
wherein the simultaneous sensing identifies that the station supports sensing or channel detection on at least two of the secondary channels simultaneously; the time-division sensing identifies that the station supports: time-division one-to-one sensing on each of the secondary channels respectively.

21. A communication device, comprising:
one or more processors;
wherein the station is configured to execute the sensing mode negotiation method according to any one of claims 1 to 9 or 10 to 18.
